# EUROPEAN PATENT APPLICATION

(11) **EP 1 189 322 A1**
(43) Date of publication of application: **20.03.2002**
(21) Application number: 00402578.9
(22) Date of filing: 18.09.2000
(51) Int. Cl.: H02G 1/00, H01B 13/00, D07B 3/06

(54) **Method for lay-up cable parts, using baskets instead of pay-off reels for the parts**

(71) Applicant: Nexans, 75008 Paris (FR)
(72) Inventor: Kristensen, Per Aage, 1792 Tistedal (NO); Aasbo, Anders Tapio, 1807 Askim (NO)
(74) Representative: Feray, Valérie

(57) **Abstract**

Method and means for pulling out at least two cables, each from a separate basket having a vertical axis around which each cable is coiled, each basket (4) being arranged on a turntable (3), pulling out each cable through a cable guide (8) reciprocating on an arm (1) protruding from the axis, the arm (1) in each basket being maintained in exactly the same geographical direction as the other arms (1), whereby the rotation of the basket is dependent on the position of the cable guide (8) on the arm (1), the basket rotation and the turntable rotation being co-ordinated with the speed by which the cable is pulled out.

## Description

The present invention is related to a method and a means for uncoiling at least two cable parts from respective rotating baskets each having vertical rotation axis and being arranged on a rotating turntable, thereby to lay up a cable without twisting it's elements.

When laying up a three-core cable, or a multicore cable or umbilical, it is very often a requirement to utilise backtwist on the pay-off stations to avoid twisting the parts to be laid up. Because the regular lay-up machine rotates, any part paid off from a reel having its axis fixed in relation to the rotating machine, will also be twisted one turn per turn of the machine. This may be detrimental to several types of elements.

This problem is traditionally counteracted by letting the axis of the payoff reel rotate relative to the rotating machine in the opposite direction i.e. backtwist. The axis of the reel will then have the same direction in relation to the surrounding building all the time (constant global direction) if there is 100% backtwist. In some situations the optimum degree of backtwist may be a little less than 100%.

As reels have a limited capacity for accommodation of load and part length, there is an option to spool the parts to be laid up into large baskets when we are using a vertical lay-up machine. During payout, the basket then has to rotate to spool out the (e.g. cable) part. If the basket does not rotate, the part will be coiled out, which also introduces one twist per turn around the basket. Hence the basket has to rotate in synchronism to two independent requirements to obtain a zero torsion situation, namely the rotation of the lay-up machine, which is dependant on the lay length and secondly the pay-out speed from the basket, which is dependant on the momentary position, the actual or instant radius, of the part in the basket.

Elaborate formulae may be construed to find the relations between linear speed, machine rotation and basket rotation. the method and means according to the present invention, however, solves this problem in a substantially simpler way, as defined by the features stated in the claims.

If it is possible to make the take-up position in the basket to maintain its bearing related to the basket centre to be constant referred to its global direction, the paid-out part will maintain its orientation constant, viewed globally, which equals 100% backtwist. This can be achieved by the use of a radial dancer arm on the basket. The arm shall be free to move independently of the basket, around the same axis as the basket rotates. Its position may be controlled by a servo, maintaining the arm at a constant global bearing. The global reference may be given by wireless signals (radio, optical, etc.) from transmitters/transponders positioned at minimum two locations around the lay-up machine. Another option may be using a gyro on each arm to give the global reference. This arm also contains a guide for the (e.g. cable) part with sensors indicating if the part is pulled out ahead of or after its correct position relative to the coil in the basket (too tight or too much slack), and thereby controlling the rotation of the basket.

The idea of laying up a bundle, backtwisting the parts, is actually to avoid twisted parts in the final product. When a reel has its axis rigidly fixed inside a twister, the side of the part pulled from that reel, which was pointing outwards related to the machine at start-up of the process, will continuously point outwards in the bundle all along it. It will be spiralled and twisted one turn once per lay length. To avoid this twisting, the reel axis will have to stay with a fixed position relative to the global surroundings - in the common case with a horizontal machine axis, relative to the floor. Then the side of the part that is pointing towards the floor will be continuously pointing towards the floor all along the length. It will not be twisted even if it is spiralled. The same will be in effect if the machine axis is vertical, then the reference may be e.g. the north wall.

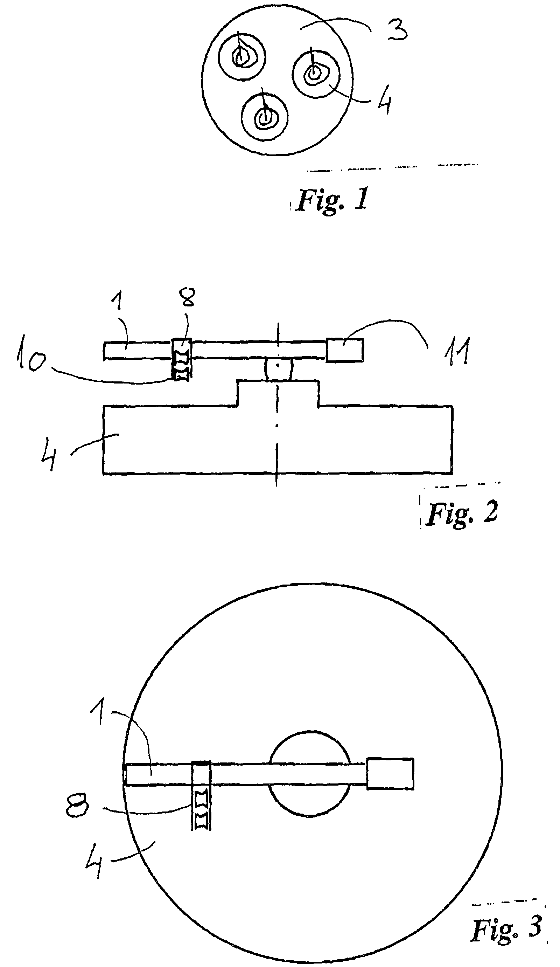

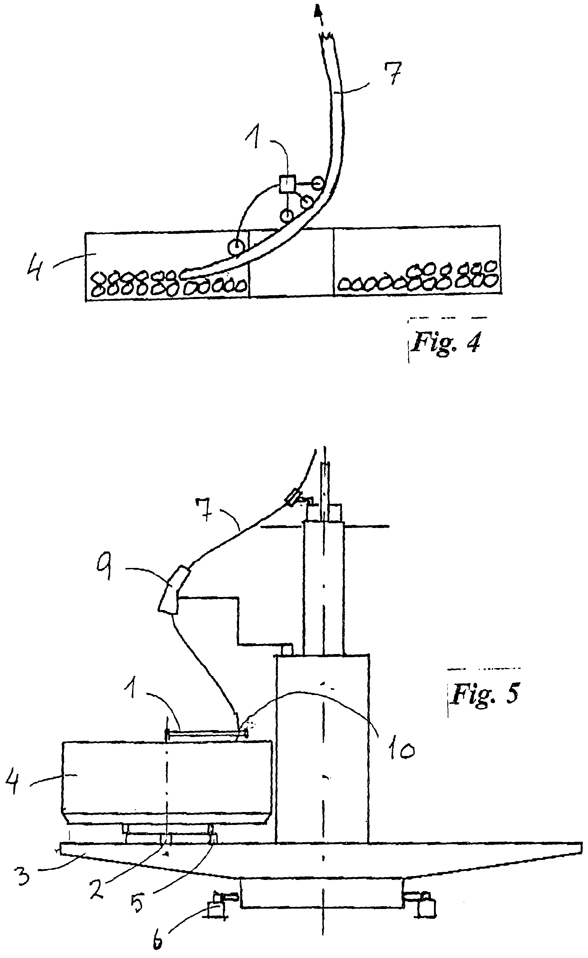

The drawing discloses in figure 1 schematically three baskets arranged on a turntable, figure 2 discloses a vertical section through a basket, figure 3 discloses the basket in figure 2 in a ground view, figure 4 discloses schematically a side view on a basket and figure 5 discloses in a side view how a cable is guided from baskets on a turntable upwardly to be twisted together with other cables from not disclosed baskets on the same turntable.

Traditionally, reels and baskets/ turntables/carousels are used for simple intermediate storage of cables. As such, pulling out a cable from a reel does not involve problems of the above type, as the side of the cable pointing towards the floor remains constant. Pulling out cable over a fixed guide from a basket with a stationary axis, will also make the side facing the floor remain constant. The guide must be fixed outside the basket. The ratio between linear speed and rotational speed will vary continuously.

Figure 1 discloses vertical lay-up with pulling out of a basket 4. In this case the problem increases. The pay-off baskets 4 are positioned on a rotating turntable 3. In order to pull the cable parts 7 out of the baskets 4, the baskets have to rotate relative to the turntable 3. If the pick-up guide is fixed on the turntable, it will be like a reel with its axis fixed inside a twister, there will be a controlled twist by one turn per lay length. To obtain a controlled backtwist, the pick-up guide must move backwards a certain amount per revolution of the turntable.

If the pick-up guide point to e.g. north all the time, then will the same side of the cable part also point towards north all the time.

The pick-up arm 1 shall have its centre of rotation to coincide with the centre of rotation of the cable basket, and the pick-up arm shall have a servo drive that makes it rotate independently relative to the basket 4.

The position respectively the direction of the pick-up arm 1 shall remain constant relative to the global surroundings - in this case the building, e.g. the north wall - to be powered by the servo drive which is controlled by e.g. a gyro, optical or wireless reference signals, a fixed transponder or other means. The pick-up arm 1 also may have a transversing cable guide 8 for smooth pick-up of the cable independently of the cable's momentary radial position inside the basket 4. This principle is known from tangential arm record players. A counterweight 11 may be necessary to balance the arm 1.

According to the invention the movement of the payout basket 4 is controlled solely by the relation between the pick-up arm 1 and the cable 7. When the cable loop is becoming too tight (lifted above normal position) the basket 4 will increase its speed; if it is too slack (resting below normal position) the basket will decrease its speed. This can be achieved by the use of e.g. a dancer arm, by optic sensors or by proximity sensors. The same sensors or an additional set of sensors also may control the transversal movement of the cable guide.

The control system will have to be refined to avoid interference between the different movements and some "filtering" to achieve smooth operation.

In another embodiment the arm 1 is freely rotating and connected to a pulse transmitter 2. The arm 1 has two guide rollers 10 arranged in a cable guide 8 to be guided by the cable 7 freely moving radially to the axis of the basket between the two rollers. The arm 1 is thus driven by the cable movement. The cable 7 is pulled out of the basket 4 by a traction/pulling unit on the top of the lay up machine when the turntable 3 starts to rotate clockwise. If the basket 4 is not rotating, the arm 1 will start to move clockwise with reference to a position e.g. north when the cable lay direction in the basket 4 is correct. As the arm 1 shall not move relative to the reference position, a fixed position is an indicator for correct back twist of the cable element, the basket 4 shall rotate counterclockwise to keep the arm 1 in the same position all the time.

To be able to control the speed of the basket synchronously to the speed of the turntable 3, the pulses from the transmitter 2 are compared with pulses from transmitter 6 which has identical number of pulses per rotation representing rotation speed of the main turntable 3. The signal from transmitter 6 is transferred through slip rings in centre of turntable. If the numbers of pulses are equal, the speed of the basket 4 is correct. If there is a deviation in pulses from two transmitters, the difference signal is used to control the speed of the basket motor 5.

The last described embodiment does not make use of more than one motor drive for each basket. Furthermore the lightweight arm 1 is driven by the cable itself and does not require a servo motor or other drive means.

Figure 5 discloses schematically the path of the cable 7 from the coil in the basket 4 rotating on a rotating turntable 3, between the guide rollers 10 of the cable guide 8 upwardly to a further guide 9 arranged in the basket rotation axis. The cable being further guided by corresponding guide means to the centre axis of the turntable 3 where cables 7 from the normally three baskets 4 on the turntable 3 are joined.

## Claims

1. Method for pulling out at least two cables, each from a separate basket having a vertical axis around which each cable is coiled, **characterized in** each basket (4) being arranged on a turntable (3), pulling out each cable through a cable guide (8) reciprocating on an arm (1) protruding from the axis, the arm (1) in each basket being maintained in exactly the same geographical direction as the other arms (1), whereby the rotation of the basket is dependent on the position of the cable guide (8) on the arm (1), the basket rotation and the turntable rotation being co-ordinated with the speed by which the cable is pulled out.

2. Means for uncoiling at least two cables from separate rotating baskets each having vertical rotational axis, **characterized in** a cable guide (8) being arranged reciprocating on a pick-up arm (1) protruding from the centre of each basket (4), the position of the cable guide (8) on the pick-up arm (1) following the pick-up position of the cable from the coil, the rotation of each basket (4) being controlled by a transmitter (2), compared to the rotation of the turntable being monitored by a further transmitter (6).

3. Means according to claim 2, **characterized in** the cable guide (8) comprising idle rollers (10) guiding the cable from the cable coil in the basket upwards to guide rollers (9) being arranged substantially in the centre axis of each basket (4).

4. Means according to claims 2-3, **characterized in** the cable guide (8) being displaced on the pick-up arm (1) by the influence of the cable thereby always being arranged at the instant radial pick-up position of the cable from the cable coil.

5. Means according to claims 2-4, **characterized in** combined sensors and transmitters (2, 6) being arranged on each basket (4) and on the turntable (3), registering the rotation speed of the turntable (3) and the individual baskets (4) as well as the cable pulling speed, the signals from the transmitters being used to control the rotation speed of the individual baskets (4) and the rotation speed of the turntable (3).

6. Means according to claims 2-5, **characterized in** sensors being arranged registering the radial pick-up position of the cable in each basket (4), based on which the cable guide (8) being reciprocated to said pick-up position.
